# EUROPEAN PATENT SPECIFICATION

(11) **EP 1 717 457 B1**
(45) Date of publication and mention of the grant of the patent: **10.09.2008**
(21) Application number: 06008544.6
(22) Date of filing: 25.04.2006
(51) Int. Cl.: F16B 21/02, F16B 21/06

(54) **Fastening system**
Befestigungssystem
Système de fixation

(30) Priority: 25.04.2005 GB 0508275
(43) Date of publication of application: 02.11.2006
(73) Proprietor: Visual Edge Limited, Strabane BT82 9JY (GB)
(72) Inventor: Friel, Ian, Strabane, County Tyrone (GB)
(74) Representative: Wallace, Alan Hutchinson

(56) References cited:
- DE-A1- 3 324 762
- US-B1- 6 474 921

## Description

### Field of the Invention

The present invention relates to a fastening device or system according to the preamble of claim 1. Such a device is known from document DE 33 24 762 A1.

### Background to the Invention

Further, US-A-4,683,670 discloses a fastening system for connecting a signboard to a support. The fastening system comprises a mounting member having a groove and a retainer having a projection. The projection and the groove form a bayonet connection when engaged and serve to secure the signboard to the support. US-A-4,683,670 discloses that the mounting member has a centrally located aperture to allow the sign to be fastened to the support by a fastener such as a screw.

### Summary of the Invention

The present invention provides a fastening system comprising a male component and a female component, the male and female components each having a respective body, the body of the male component being shaped and dimensioned to fit into the body of the female component, wherein one of said male and female components comprises a flexible clip biased to adopt a rest state, and the other of said male and female components includes a seat for at least a portion of said clip, and wherein, upon insertion of the body of said male component into the body of said female component in an axial direction, said clip is deflected from its rest state against said bias to adopt a holding state in which said clip engages with said other of the male and female components, and wherein, upon relative rotation of the male and female components when in the holding state, at least said portion of the clip engages with said seat to lock said male and female portions together.

Typically, in the holding state, the clip is biased to exert a holding force on said other of the male and female components. Preferably, said seat comprises a recess or aperture formed in the body of said other of the male and female components.

Preferably, said seat includes at least one side wall, said at least one side wall and/or said portion of the clip being shaped to cause said portion of the clip to be removed from the seat upon relative rotation of the male and female components by engagement of said at least one side wall and said clip portion.

Preferably, said seat includes an end wall, said end wall and/or said portion of the clip being shaped to substantially prevent said portion of the clip from being removed from the seat upon relative movement of said male and female components in said axial direction by engagement of said end wall and said clip portion.

Preferably, said portion of the clip comprises a projection arranged to project towards the other of said male and female components when said components are fitted together. The body of said other of the male and female components preferably includes a protrusion arranged to engage with said projection upon relative movement of said male and female components in said axial direction from the holding state in order to inhibit separation of the male and female components.

The protrusion may comprise a rib running partially around the body of said other of the male and female components.

Advantageously, the protrusion and the seat substantially do not overlap in said axial direction.

In typical embodiments, the body of one or both of said male and female components is substantially cylindrical in shape.

The clip is advantageously formed at least partially from a flexible resilient material. The clip may be integrally formed with said one of the male and female components, e.g. by plastics moulding.

In the preferred embodiment, the clip is provided on said female component and said seat is provided on said male component.

Advantageously, the body of one or both of the male and female components has a free end, a plurality of indentation forming members being provided on said free end. Preferably, at least four indentation forming members are provided on said free end, the members being substantially evenly spaced around said free end.

Preferably, at least one of said bodies projects from an obverse face of a base, and wherein the reverse face of said base includes a substantially flat surface and/or at least one aperture for receiving a fixing device.

The clip conveniently forms part of the body of said one of said male and female components.

In use of the preferred embodiment, when the male and female components initially engage, the clip deflects as it passes over the protrusion located on the other component and holds the components together in a holding state. The assembly can be disengaged from the holding state by the application of an axial force overcoming the positive, or resilient, engagement of the clip and the protrusion. In other embodiments, the holding state may be effected by the force applied by the clip and without the need for the protrusion.

When in the holding state, rotation of one of the components with respect to the other causes the clip to snap fit into the aperture, thus locking the components in place. To release the components, one of the components is rotated with respect to the other to force the clip out of the aperture and back to the holding state, from which the assembly can be disengaged by the application of an axial force.

Both components advantageously comprise a substantially flat base to allow for the application of, e.g. a chemical bond or other fixing agent, to fix the components to the surface of a fixture or fitting such as a signboard, fascia, sign or sign part. Alternatively, or in addition, a hole provided through each component base provides for the insertion of a mechanical fixing such as a screw.

Further advantageous aspects of the invention will become apparent to those ordinarily skilled in the art upon review of the following description of a specific embodiment and with reference to the accompanying drawings.

### Brief Description of the Drawings

A preferred embodiment of the invention will now be described by way of example with reference to the accompanying drawings, in which:
Figure 1 is an isometric view of a male component of a fastening system embodying the invention;
Figures 2(a)&(b) are isometric views of a female component cooperable with the component of Figure 1;
Figures 3(a)-(c) show the components of Figures 1 and 2 in a holding state; and
Figures 4(a)-(c) show the components of Figures 1 and 2 in a locked state.

### Detailed Description of the Drawings

Referring now to the drawings, the system comprises a male component 10 and a corresponding female component 20 which are inter-engagable with one another as is described in more detail below. Typically, each component 10, 20 comprises a respective substantially cylindrical body 18, 29. The body 18 of the male component 10 is typically of smaller diameter than the body 29 of the female component 20 such that the male component 10 fits into the female component 20. The male and female components 10, 20 each have a generally solid base 13, 23 from which the respective bodies 18, 29 project.

The body 18 of the male component 10 preferably includes an outwardly projecting interference protrusion or rib 11 which is spaced from the base 13 and runs at least partially around the external surface of the body 18, conveniently in a generally circumferential manner. The body 18 also includes a recess, or preferably an aperture 12, preferably formed adjacent the base 13, or at least between base 13 and the level of the rib 11. In the preferred embodiment, the rib 11 extends only partially around the body 18 and the aperture 12 is substantially aligned with a region of the body around with the rib 11 does not extend.

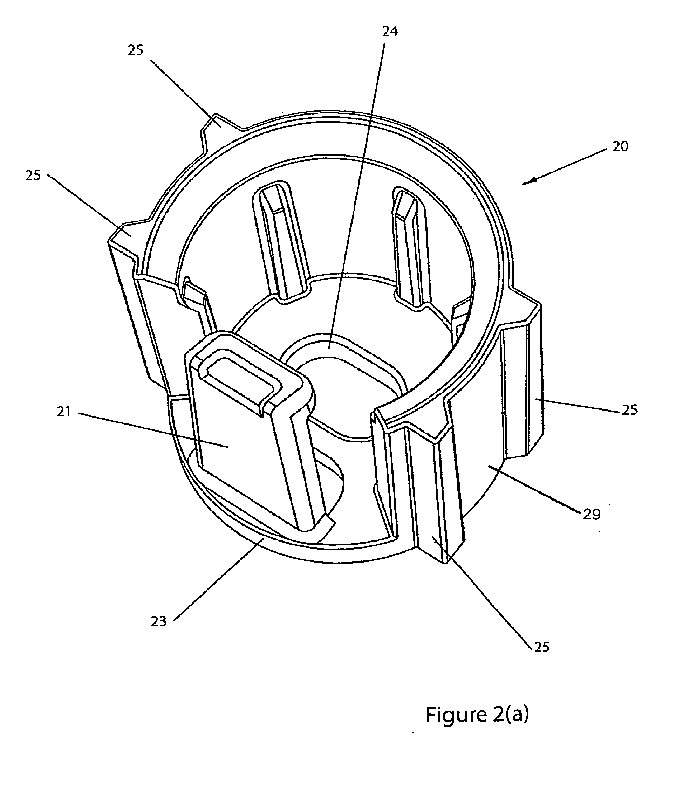

The components 10, 20 may be held together by means of a flexible clip 21 having an inwardly projecting protrusion or nose 22 and, conveniently, forming part of the body 29 or side wall of the female component 20 (or being provided in a gap formed in the body 29). The clip 21 has a rest state (Figure 2(a)) and exhibits a resilience, or is biased, to return to the rest state if displaced therefrom. Conveniently, the clip 21 has an inherent resilience and is, for example, co-formed with the base 23 by plastics moulding. The nose 22 projects inwardly of the body 29 such that it engages with the body 18 of the male component 10 when the male component 10 is inserted into the female component 20 thus causing the clip 21 to be displaced from the rest state outwardly with respect to the body 29.

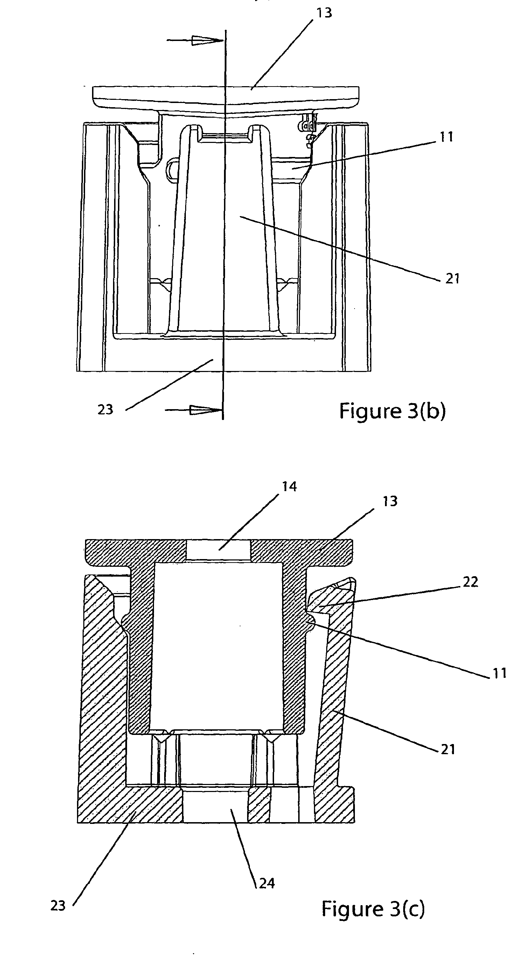

The clip 21 may operate in two modes; firstly, when the male and female components 10, 20 are initially engaged, the clip 21 is displaced outwardly, against its resilience or bias, by the body 18 and subsequently rides over the rib 11. Once the clip 21 is beyond the rib 11, the clip 21 is able to flex back to engage with the outer surface of the body 18 between the rib 11 and the base 13. In this holding state, the clip 21 is under tension and its resilience or bias urges it into contact with the male component 10. This resistance, in conjunction with the engagement of the nose 22 and rib 11 (when present), holds the assembly of male and female components 10, 20 together. Even though the clip 21 and rib 11 are providing resistance, the components 10, 20 can still be disassembled by pulling them apart in the direction of their common axis. Provision of the rib 11, or other protrusion, is preferred since the rib 11 and nose 22 may engage in the holding state (as shown in Figure 3(c)) and this provides an increased resistance against pulling the components 10, 20 apart from the holding state. In alternative embodiments, the rib 11 may be omitted. In a still further embodiment, the clip is only deflected out of its rest state by the protrusion/rib and so adopts its rest state when in the holding state - in this embodiment, it is the interference between the nose 22 and the rib 11 (or their equivalents) that provides resistance against pulling the components apart from the rest state,

The second mode can be implemented when the two components 10, 20 are in the holding state by relative rotation of the components 10, 20 about their common axis until the nose 22 snaps, under the resilience of the clip, into the window aperture 12 formed in the side wall, or body 18, of the male component 10. This causes the components 10, 20 to adopt a locked state in which they cannot readily be separated by pulling them apart in the direction of their common axis.

To release the two components 10, 20 from the locked state, the female 20 (or the male 10) is rotated either in a clockwise or anticlockwise direction about their common axis, forcing the nose 22 out of the aperture 12 (by engagement with the sides of the aperture) and back under tension against the exterior surface of the body 18, i.e. back to the holding state from which the components 10, 20 can be pulled apart axially. To this end, the nose 22, and/or the walls 15', 15" of the aperture 12, are preferably shaped, e.g. rounded, such that engagement of the nose 22 and walls 15', 15" during relative rotation of the components 10, 20 causes the nose 22 to be displaced outwardly to an extent that the components 10, 20 may resume the holding state.

In alternative embodiments, the rib 11 may be provided on the inner surface of the outer or female component, the clip 21 being provided on the inner or male component and arranged to flex inwardly upon engagement of the nose with the rib. The aperture 12 may also be provided in the wall of the female component.

There are two preferred attachment options for fixing the components 10, 20 to their respective fixture/fitting (not shown). The respective flat base 13, 23 on the male and female components 10, 20 allows for the application of a chemical bond, while a respective aperture 14, 24 through the base 13, 23 of each of the male and the female 10, 20 allows for a mechanical fixing. For a mechanical fixing, screws (not shown) or other fixing means inserted through the apertures 14, 24 in the male and female components 10, 20. When the system is assembled, the apertures 14, 24 are preferably in register with one another, or at least partially in register with one another.

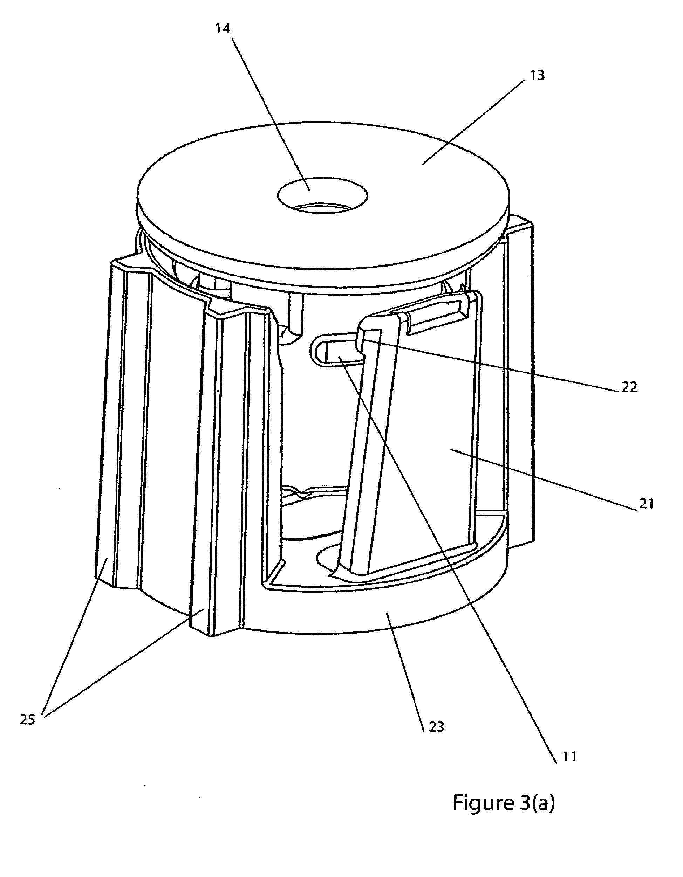

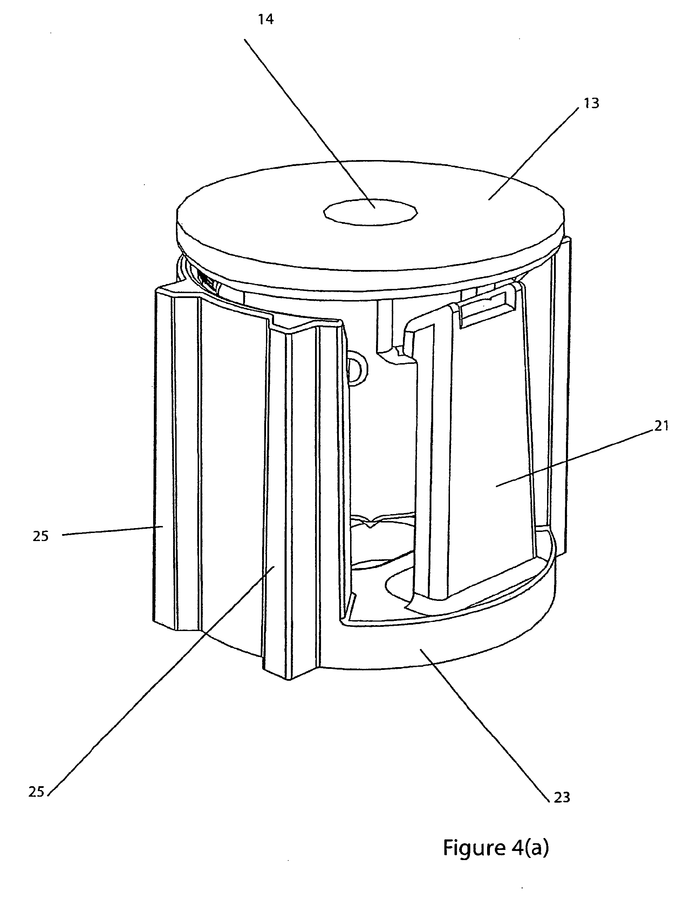

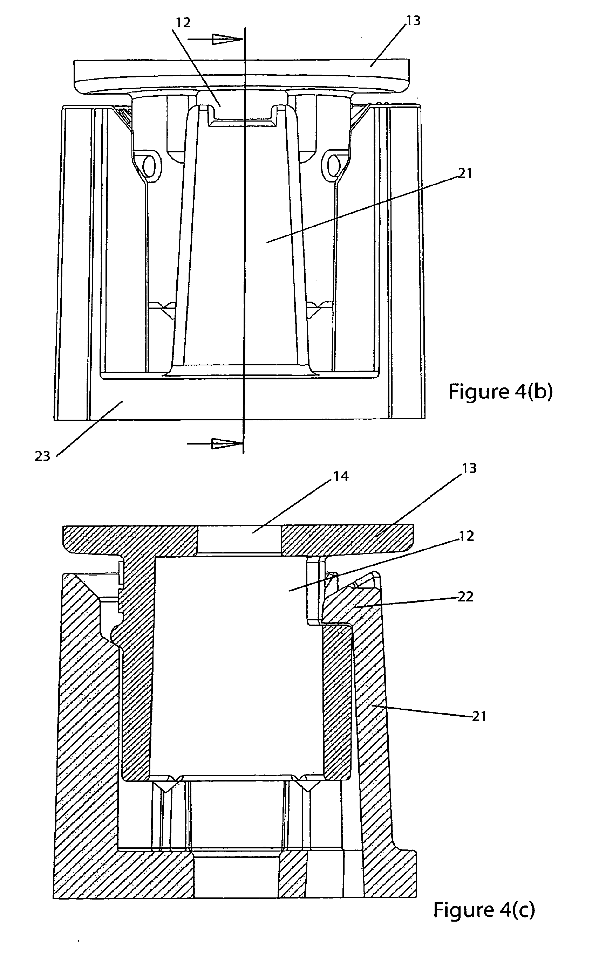

To fit the components 10, 20 together, the male 10 and female 20 are initially engaged (Figure 3(a)) with the clip 21 riding over the interference rib 11 and holding the two components 10, 20 together as described above. To lock the components 10, 20, the female 20 (typically) is rotated until the clip 21 snaps into the aperture 12 in the male 10 (Figure 4(a)-(c)).

It is preferred that the window or aperture 12 lies circumferentially substantially in register with the discontinuity in the projecting rib 11 to allow the clip 21 to properly engage in the aperture 12 when in the locked state. It is also preferred that the walls 15',15" of the aperture 12 running parallel with the longitudinal axis of the component 10 are bevelled to allow the clip 21 to slide out of the aperture 12 when rotated, whereas the bridging wall 16 is preferably straight cut to inhibit or prevent relative axial movement of the components 10, 20 when in the locked state.

The fastening system, or device, of the present invention provides means for fixing, for example, sign/shop fitting products to interior or exterior fixtures such as fascias (although there are numerous other applications).

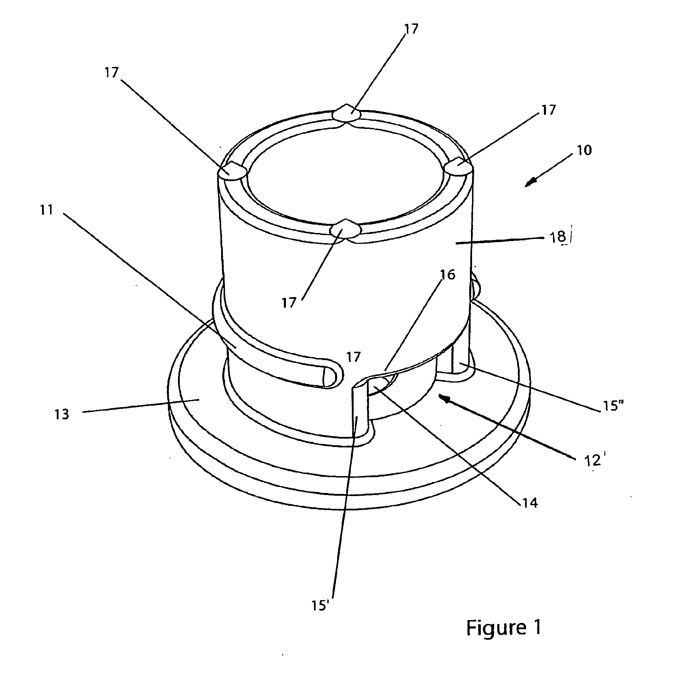

In more detail, referring to Figure 1, a plurality of, and preferably four, spikes or cone shaped points 17 are advantageously formed on the free edge or end of the body 18 of the male component 10. The points 17 are circumferentially spaced apart, advantageously at regular intervals. The points 17 may be used to identify where a centre hole should be drilled for the mounting of the female component 20. For example, the points 17 may be pressed against a fixture, such as a fascia surface, creating respective indentations. The resulting marks may be diagonally joined up to find their intersection at which point the centre can be marked. This enables a fitting, for example, a sign or letter, to which the male component has been previously fixed to be accurately located on a fascia. Similar spikes or points may alternatively, or in addition, be provided on the body 29 of the female component 20.

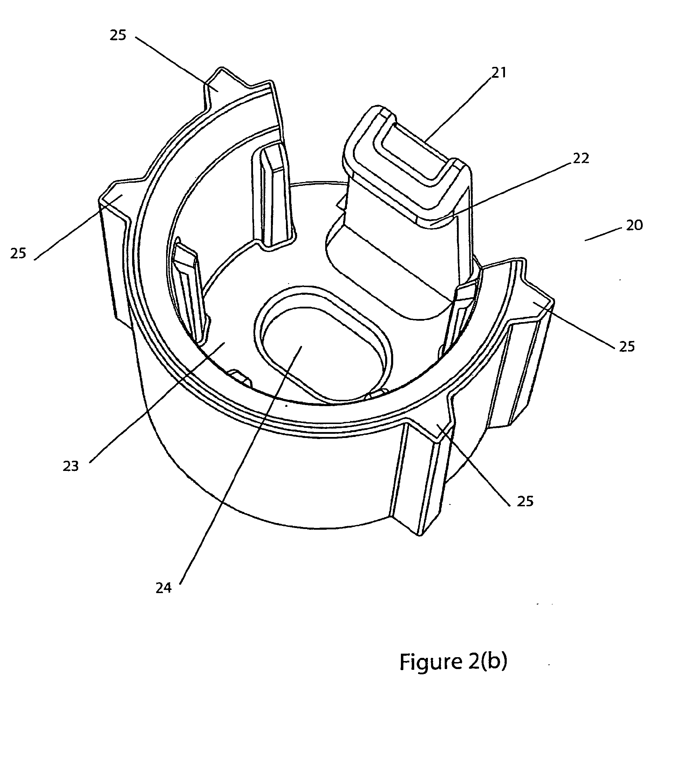

Referring to Figure 2, it will be seen that running along opposite external sides of the female component 20, there are formed a plurality of longitudinal ribs 25 conveniently formed in pairs. These enable the body 29 to be gripped either by hand, or by a tool such as a spanner, located around the female component 20 between the fixture and fitting either to rotationally adjust the fitting or to enable the female component 20 to be rotated out of the locked state into the holding state prior to removal of the fitting from the fixture.

While the embodiment has been described in terms of the male member being fixed to a removable fitting and the female member being fixed to a fixture, the system may equally be employed in reverse.

Conveniently, the male and female components 10, 20 are formed from plastics, and may each be formed as a respective single piece by means of conventional moulding.

## Claims

1. A fastening system comprising a male component (10) and a female component (20), the male and female components each having a respective body (18,29), the body (18) of the male component (10) being shaped and dimensioned to fit into the body (29) of the female component (20), wherein one of said male and female components comprises a flexible clip (21) biased to adopt a rest state, and the other of said male and female components includes a seat for at least a portion of said clip, **characterised in that**, upon insertion of the body (18) of said male component (10) into the body (29) of said female component (20) in an axial direction, said clip (21) is deflected from its rest state against said bias and adopts a holding state in which said clip (21) engages with said other of the male and female components (10,20), and wherein, upon relative rotation of the male and female components (10,20) when in the holding state, at least said portion of the clip (21) engages with said seat to lock said male and female portions together.

2. A fastening system as claimed in Claim 1, wherein, in the holding state, the clip (21) is biased to exert a holding force on said other of the male and female components (10,20).

3. A fastening system as claimed in Claim 1 or 2, wherein said seat comprises a recess or aperture (12) formed in the body of said other of the male and female components (10,20).

4. A fastening system as claimed in any preceding claim, wherein said seat includes at least one side wall (15',15"), said at least one side wall and/or said portion of the clip (21) being shaped to cause said portion of the clip to be removed from the seat upon relative rotation of the male and female components (10,20) by engagement of said at least one side wall and said clip portion.

5. A fastening system as claimed in any preceding claim, wherein said seat includes an end wall (16), said end wall and/or said portion of the clip (21) being shaped to substantially prevent said portion of the clip from being removed from the seat upon relative movement of said male and female components (10,20) in said axial direction by engagement of said end wall and said clip portion.

6. A fastening system as claimed in any preceding claim, wherein said portion of the clip (21) comprises a projection (22) arranged to project towards the other of said male and female components (10,20) when said components are fitted together.

7. A fastening system as claimed in Claim 6, wherein the body of said other of the male and female components (10,20) includes a protrusion (11) arranged to engage with said projection (22) upon relative movement of said male and female components in said axial direction from the holding state in order to inhibit separation of the male and female components.

8. A fastening system as claimed in Claim 7, wherein said protrusion (11) comprises a rib running partially around the body of said other of the male and female components (10,20).

9. A fastening system as claimed in Claim 7 or 8, wherein said protrusion (11) and said seat substantially do not overlap in said axial direction.

10. A fastening system as claimed in any preceding claim, wherein the body of one or both of said male and female components (10,20) is substantially cylindrical in shape.

## Patentansprüche

1. Befestigungssystem, das eine Steckkomponente (10) und eine Buchsenkomponente (20) aufweist, wobei die Steck- und die Buchsenkomponente jeweils einen jeweiligen Körper (18, 29) aufweisen, und der Körper (18) der Steckkomponente (10) geformt und bemessen ist, um in den Körper (29) der Buchsenkomponente (20) zu passen, wobei eine der Steck- und der Buchsenkomponente eine flexible Klemme (21) aufweist, die zum Annehmen eines Ruhezustands vorgespannt ist, und die andere der Steck- und der Buchsenkomponente einen Sitz für mindestens einen Teil der Klemme einschließt, **dadurch gekennzeichnet, dass** bei Einführung des Körpers (18) der Steckkomponente (10) in den Körper (29) der Buchsenkomponente (20) in einer axialen Richtung die Klemme (21) aus ihrem Ruhezustand gegen die Vorspannung abgelenkt wird und einen Haltezustand annimmt, in dem die Klemme (21) mit der anderen der Steck- und der Buchsenkomponente (10, 20) in Eingriff kommt, und wobei, bei relativer Drehung der Steck- und der Buchsenkomponente (10, 20), wenn sich diese im Haltezustand befinden, mindestens der Teil der Klemme (21) mit dem Sitz in Eingriff kommt, um den Steck- und den Buchsenteil aneinander zu verriegeln.

2. Befestigungssystem nach Anspruch 1, bei dem die Klemme (21) im Haltezustand vorgespannt ist, um eine Haltekraft auf die genannte andere der Steck- und der Buchsenkomponente (10, 20) auszuüben.

3. Befestigungssystem nach Anspruch 1 oder 2, bei dem der Sitz eine Ausnehmung oder Öffnung (12) aufweist, die in dem Körper der anderen der Steck- und der Buchsenkomponente (10, 20) ausgebildet ist.

4. Befestigungssystem nach einem vorhergehenden Anspruch, bei dem der Sitz mindestens eine Seitenwand (15', 15") umfasst, und die mindestens eine Seitenwand und/oder der Teil der Klemme (21) geformt sind, um Entfernen des Teils der Klemme von dem Sitz bei relativer Drehung der Steck- und der Buchsenkomponente (10, 20) durch Ineinandergreifen der mindestens einen Seitenwand und des Klemmenteils zu bewirken.

5. Befestigungssystem nach einem vorhergehenden Anspruch, bei dem der Sitz eine Endwand (16) umfasst, wobei die Endwand und/oder der Teil der Klemme (21) geformt sind, um im Wesentlichen Entfernen des Teils der Klemme von dem Sitz bei relativer Bewegung der Steck- und der Buchsenkomponente (10, 20) in der axialen Richtung durch Ineinandergreifen der Endwand und des Klemmenteils zu verhindern.

6. Befestigungssystem nach einem vorhergehenden Anspruch, bei dem der Teil der Klemme (21) einen Vorsprung (22) aufweist, der zum Vorstehen in Richtung der anderen der Steck- und der Buchsenkomponente (10, 20) angeordnet ist, wenn die Komponenten aneinander befestigt sind.

7. Befestigungssystem nach Anspruch 6, bei dem der Körper der anderen der Steck- und der Buchsenkomponente (10, 20) einen Vorsprung (11) umfasst, der zum Ineinandergreifen mit dem Vorsprung (22) bei relativer Bewegung der Steck- und der Buchsenkomponente in der axialen Richtung aus dem Haltezustand angeordnet ist, um Trennung der Steck- und der Buchsenkomponente zu hemmen.

8. Befestigungssystem nach Anspruch 7, bei dem der Vorsprung (11) eine Rippe aufweist, die teilweise um den Körper der anderen der Steck- und der Buchsenkomponente (10, 20) herum verläuft.

9. Befestigungssystem nach Anspruch 7 oder 8, bei dem der Vorsprung (11) und der Sitz sich im Wesentlichen nicht in der axialen Richtung überlappen.

10. Befestigungssystem nach einem vorhergehenden Anspruch, bei dem der Körper einer oder beider der Steck- und der Buchsenkomponente (10, 20) eine im Wesentlichen zylindrische Form aufweist.

## Revendications

1. Système de fixation comportant un composant mâle (10) et un composant femelle (20), les composants mâle et femelle ayant chacun un corps respectif (18, 29), le corps (18) du composant mâle (10) ayant une forme et des dimensions telles qu'il s'emboîte dans le corps (29) du composant femelle (20), où un desdits composants mâle et femelle comporte un clip flexible (21) orienté pour adopter un état de repos, et l'autre desdits composants mâle et femelle comporte un siège pour au moins une partie dudit clip, **caractérisé en ce que**, lors de l'insertion du corps (18) dudit composant mâle (10) dans le corps (29) dudit composant femelle (20) en une direction axiale, ledit clip (21) est défléchi de son état de repos contre ladite orientation et adopte un état de maintien dans lequel ledit clip (21) fait prise sur l'autre desdits composants mâle et femelle (10, 20), et où, lors de la rotation relative des composants mâle et femelle (10, 20) pendant l'état de maintien, au moins ladite partie du clip (21) fait prise sur ledit siège pour verrouiller l'un à l'autre lesdites parties mâle et femelle.

2. Système de fixation conforme à la revendication 1, où, dans l'état de maintien, le clip (21) est orienté pour exercer une force de maintien sur ledit autre des composants mâle et femelle (10, 20).

3. Système de fixation conforme à la revendication 1 ou 2, où ledit siège comporte un renfoncement ou une ouverture (12) formé dans le corps dudit autre des composants mâle et femelle (10, 20).

4. Système de fixation conforme à une quelconque des revendications précédentes, où ledit siège comporte au moins une paroi latérale (15', 15"), ladite au moins une paroi latérale et/ou ladite partie du clip (21) étant formée de manière à amener ladite partie du clip à être retirée du siège par la rotation relative des composants mâle et femelle (10, 20) par l'engagement de ladite au moins une paroi latérale et ladite partie de clip.

5. Système de fixation conforme à une quelconque des revendications précédentes, où ledit siège comporte une paroi latérale (16), ladite paroi latérale et/ou ladite partie du clip (21) étant formée de manière à empêcher sensiblement ladite partie du clip d'être retirée du siège lors du mouvement relatif desdits composants mâle et femelle (10, 20) dans ladite direction axiale par l'engagement de ladite paroi latérale et ladite partie de clip.

6. Système de fixation conforme à une quelconque des revendications précédentes, où ladite partie du clip (21) comprend une projection (22) disposée de manière à se projeter vers l'autre desdits composants mâle et femelle (10, 20) quand lesdits composants sont emboîtés l'un dans l'autre.

7. Système de fixation conforme à la revendication 6, où le corps dudit autre des composants mâle et femelle (10, 20) comprend une protubérance (11) disposée pour s'engager avec la projection (22) lors du mouvement relatif desdits composants mâle et femelle dans ladite direction axiale à partir de l'état de maintien afin d'empêcher la séparation des composants mâle et femelle.

8. Système de fixation conforme à la revendication 7, où ladite protubérance (11) comprend une nervure s'étendant partiellement autour du corps desdits composants mâle et femelle (10, 20).

9. Système de fixation conforme à la revendication 7 ou 8, où ladite protubérance (11) et ledit siège ne se recouvrent sensiblement pas dans ladite direction axiale.

10. Système de fixation conforme à une quelconque des revendications précédentes, où le corps d'un ou des deux composants mâle et femelle (10, 20) est de forme sensiblement cylindrique.
